# EUROPÄISCHE PATENTSCHRIFT

(11) **EP 1 386 096 B1**
(45) Veröffentlichungstag und Bekanntmachung des Hinweises auf die Patenterteilung: **19.10.2005**
(21) Anmeldenummer: 02769445.4
(22) Anmeldetag: 13.05.2002
(51) Int. Cl.: F16H 53/02, F01L 1/047

(54) **NULLGURT-NOCKENWELLE**
ZERO BELT CAMSHAFT
ARBRE A CAMES RAPPORTEES

(30) Priorität: 11.05.2001 CH 862012001
(43) Veröffentlichungstag der Anmeldung: 04.02.2004
(73) Patentinhaber: Merz, Karl, CH-5734 Reinach/AG (CH)
(72) Erfinder: Merz, Karl, CH-5734 Reinach/AG (CH)
(74) Vertreter: Isler & Pedrazzini AG
(86) Internationale Anmeldenummer: PCT/CH2002/000259
(87) Internationale Veröffentlichungsnummer: WO 2002/093040

(56) Entgegenhaltungen:
- DE-A- 4 324 836
- US-A- 2 621 539

## Beschreibung

### TECHNISCHES GEBIET

Die vorliegende Erfindung betrifft eine Nockenwelle einer Ventilsteuerung in Verbrennungsmotoren mit rohrförmiger Welle und mit auf dieser radial aufgesetzten Nocken, gemäss dem Oberbegriff des Anspruchs 1. Derartige Nockenwellen werden auch als Nullgurt-Nockenwellen bezeichnet.

### STAND DER TECHNIK

Eine Nockenwelle dieser Art ist aus der DE 43 24 836 A1 bekannt. Die bekannte Nockenwelle umfasst als Welle ein Blechrohr, in Ausschnitte von welchem ebenfalls aus Blech vorgefertigte, napfartige Nocken eingesetzt sind. Pro Nocken sind in einer von mehreren Ausführungsvarianten jeweils zwei Ausschnitte vorhanden. Die bekannte Nockenwelle ist in Leichtbauweise ausgeführt. Welle und Nocken sind aus Gewichtserspamisgründen entsprechend dünnwandig gewählt. Zwischen den Nocken und der Welle ist im Hubbereich der Nocken ein relativ grosser Abstand vorhanden. Die Welle weist aufgrund ihrer Bauweise eine verhältnismässig geringe Steifigkeit und Stabilität auf. Die Herstellung der napfförmigen Blechnocken ist aufwendig und teuer.

Aus der Druckschrift US-A-2,621,539 ist eine mit Nocken arbeitende, elektrische Zeitsteuerungsvorrichtung bekannt, die auf dem aus dem Kurbelwellengehäuse eines Verbrennungsmotors herausragenden Abschnitt der Kurbelwelle angeordnet ist. Auf dem Kurbelwellenabschnitt ist drehfest eine Hülse befestigt, die axiale Nuten aufweist, in die mit Vorspannung und klemmend Nocken eingesetzt werden können. Die Nocken sind aus einem elektrisch isolierenden Material wie z.B. Nylon und betätigen ein oberhalb der Kurbelwelle angeordnetes elektrisches Kontaktpaar.

### DARSTELLUNG DER ERFINDUNG

Die durch die Erfindung geschaffene Nockenwelle, wie sie in den Patentansprüchen gekennzeichnet ist, zeichnet sich gegenüber der vorbekannten vor allem durch eine höhere Formstabilität sowie durch eine einfacherere, kostengünstigere Herstellbarkeit aus. Die erfindungsgemässe Nockenwelle ist ebenfalls eine Nullgurt-Nockenwelle.

Gemäss Anspruch 1 ist die erfindungsgemässe Nockenwelle dadurch gekennzeichnet, dass die Nocken jeweils in taschenförmig ausgebildete Vertiefungen der Welle eingreifen. Durch die taschenförmige Ausbildung der Vertiefungen weisen diese einen stabilisierenden Boden auf. Es sind dadurch im Unterschied zum vorgenannten Stand der Technik im Bereich der Nocken keine die Welle schwächenden Ausnehmungen oder Ausschnitte in der Welle vorhanden.

In einer ersten bevorzugten Ausführungsform der Erfindung ist die Wandstärke der Welle im Bereich der taschenförmigen Vertiefungen nicht oder zumindest nicht wesentlich geringer als ausserhalb dieser Bereiche. Hierdurch wird eine besonders hohe Stabilität und Biegesteifigkeit der Welle erreicht.

Wie aus dem Stand der Technik an sich schon bekannt, können pro Nocke zwei taschenförmige Vertiefungen an der Welle vorgesehen sein.

In den taschenförmigen Vertiefungen sind die Nocken mit weiterem Vorteil in Umfangs- und/oder Axialrichtung der Welle formschlüssig gehalten.

Weiter können die Nocken mit der Welle (in Umfangsrichtung der Welle) verzahnt sein, wobei bevorzugt zwischen zwei taschenförmigen Vertiefungen ein jeweils Zahn an der Welle und an den Nocken jeweils eine komplementäre Nut ausgebildet ist. Durch eine derartige Verzahung kann in Umfangsrichtung ein grosses Moment zwischen den Nocken und der Welle übertragen werden.

Die Nocken erstrecken sich in an sich schon bekannter Weise in Umfangsrichtung der Welle über einen Winlcelbereich von weniger als 180°. Vorzugsweise sind sie dabei jedoch als kompakte, massiv umgeformte Formteile ausgebildet. In dieser Form sind sie besonders stabil, hoch belastbar sowie einfach und kostengünstig herstellbar.

Im Hubbereich der Nocken ist zwischen den Nocken und der Welle gemäss einer weiteren bevorzugten Ausführungsform der Erfindung kein oder ein im Vergleich mit der Wandstärke der Welle und/oder der Nocken lediglich schmaler Spalt vorhanden ist. Auch dies trägt zu einer hohen Stabilität und Belaslbarkeit der Nocken bei.

Insbesondere wenn die Nocken mit ihren Enden in zwei taschenförmigen Vertiefungen in Umfangs- und/oder Axialrichtung der Welle formschlüssig gehalten, sowie ggf. zusätzlich in Umfangsrichtung mit der Welle verzahnt sind, genügt es, sie lediglich im Bereich ihrer beiden Enden mit der Welle schweiss-, löt- oder klebeteclinisch zu verbinden.

Gemäss einer weiteren bevorzugten Ausführungsform bestehen die Nocken aus einem hoch härtbaren Material und/oder die Welle aus einem niedergekohlten, leicht härtbaren Material.

Die taschenförmigen Vertiefungen in der Welle können einfach von aussen in die Welle eingeprägt oder unter Anwendung von Innenhochdruck unter Gegenhalten von aussen hergestellt werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: einen Abschnitt einer noch nicht vollständig mit Nocken bestückten Nockenwelle nach der Erfindung in Seitenansicht;
- Fig. 2: ebenfalls einen Abschnitt einer ebenfalls noch nicht vollständig mit Nocken bestückten Nockenwelle nach der Erfindung in perspektivischer Ansicht;
- Fig. 3: unter a) eine Schnittansicht (A-A in Fig. 1) einer erfindungsgmässen Nocke, unter b) eine Schnittansicht der Welle im Montagebereich der Nocke und unter c) die beiden Teile zusammengefügt.

### WEGE ZUR AUSFÜHRUNG DER ERFINDUNG

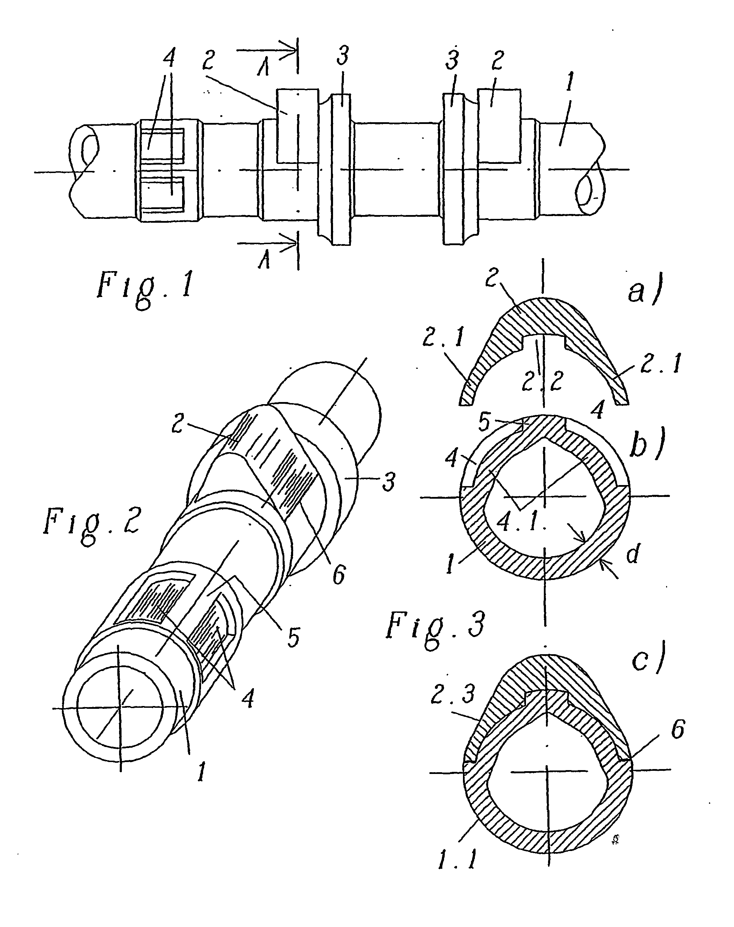

In Fig. 1 ist mit 1 eine rohrförmige Welle, mit 2 zwei auf die Welle radial aufgesetzte Nocken und mit 3 zwei Lagerringe bezeichnet. 4 bezeichnet eine taschenförmige Vertiefung in der Welle 1, welche zur Montage eine weiteren, nicht dargestellten Nocke vorgesehen ist. Eine entsprechende, zugehörige taschenförmige Vertiefung ist auch auf der Rückseite der Welle vorhanden und deshalb nicht sichtbar. In gleichartige Paare solcher Vertiefungen sind auch die Nocken 2 mit ihren Endabschnitten 2.1 jeweils eingepasst.

Details bezüglich der Ausbildung der Nocken 2, der taschenförmigen Vertiefungen 4 sowie der Montage der Nocken in den taschenförmigen Vertiefungen sind den Figuren 2 und 3 zu entnehmen.

Erkennbar sind die Nocken 2 nicht ganz halbkreisförmige und tendentiell etwas v-förmige Teile. Sie können z.B. einfach aus einem Blech-und/oder einem Profilstreifen durch Massivumformung hergestellt sein. Die taschenartigen Vertiefungen 4 in der Welle 1 sind etwa rechteckig ausgebildet und bezüglich ihrer Grösse und Tiefe an die Grösse sowie an die Dicke und Form der Endabschnitte 2.1 der Nocken 2 angepasst. Ihr durchgängiger, nicht durchbrochener Boden 4.1 weist in etwa die gleiche Wandstärke d wie die Welle 1 im übrigen auf. Das Wandungsmaterial der Welle 1 ist im Bereich der Vertiefungen 4 einfach etwas nach innen gedrückt.

Pro Nöcke 2 sind jeweils zwei taschenartige Vertiefungen 4 mit etwas Abstand voneinander vorhanden. Wenn die Nocken 2 auf die Welle 1 aufgesetzt sind, greifen sie mit ihren Enden 2.1 in die beiden taschenartigen Vertiefungen 4 passgenau ein, so wie dies in Fig. 3 unter c) erkennbar ist. Indem die Nocken 2 nicht ganz halbkreisförmig ausgebildet sind, erstrecken sie sich auf der Welle 1 über einen Winkelbereich von weniger als 180°.

Durch den Abstand der beiden taschenartigen Vertiefungen voneinander ergibt sich eine Art Zahn 5, welcher mit einer Nut 2.2 im Hubbereich der Nocken 2 zusammenwirkt, wenn die Nocken 2 auf die Welle 1 aufgesetzt sind und mit ihren Enden 2.1 in die Vertiefungen 4 eingreifen, so wie dies in Fig. 3 unter c) ebenfalls erkennbar ist. Hierdurch ergibt sich eine Verzahnung zwischen der Welle 1 und den Nocken 2 in Umfangsrichtung der Welle 1, durch welche ein hohes Moment in Umfangsrichtung der Welle 1 übertragen werden kann.

Die Form der Nocken 2, die Dicke ihrer Enden 1.2 sowie die Tiefe der taschenförmigen Vertiefungen 4 sind weiter so aufeinander abgestimmt, dass sich von der von den Nocken 2 nicht überdeckten, freien Wellenoberfläche 1.1 zu den Nocken 2 an beiden Enden 2.1 der Nocken 2 jeweils ein kontinuierlicher, stufenloser Übergang ergibt.

Durch ihren passgenauen Eingriff in die Vertiefungen 4 sind die Nocken 2 zusätzlich in Umfangs- sowie auch in Axialrichtung der Welle 1 formschlüssig festgelegt. Zur dauerhaften Verbindung des Nocken 2 mit der Welle 1 genügt es deshalb, lediglich bei 6 eine Schweissung, eine Lötung oder eine Klebung vorzusehen, die nur geringen Belastungen ausgesetzt wird. Zumindest im Falle einer Schweissung sollte die sich ergebende Schweissraupe bei 6 nachträglich noch weggeschliffen werden, um den erwähnten glatten Übergang zwischen der freien Wellenoberfläche 1.1 zur Aussenfläche 2.3 der Nocken 2 sicherzustellen.

Im Rahmen der beschriebenen erfindungsgemässen Konstruktion ist es ohne weiteres möglich und bevorzugt, die Nocken 2 in ihrem Hubbereich so dick auszubilden, dass zwischen ihnen und der Welle 1 kein oder ein im Vergleich mit der Wandstärke d der Welle 1 lediglich schmaler Spalt vorhanden ist. Es wird dann eine hohe Stabilität erreicht. Das Vorhandensein der Nut 2.2 trägt hierbei dazu bei, die Dicke der 2 in ihrem Hubbereich zu begrenzen.

Die Welle 1 von Fig. 1 weist über ihre Länge auch noch einen ungleichen Durchmesser auf. Im Montagebereich der Nocken 2 ist dieser grösser als beispeilsweise im Lagerbereich zwischen den beiden Lagerringen 3. Diese Struktur kann im gleichen Arbeitsgang wie das Einbringen der taschenförmigen Vertiefungen, inbesondere durch Anwendung des Innenhochdruckverfahrens oder auch durch Rollen, hergestellt werden.

Die Nockenwelle nach der Erfindung ist, wie bereits erwähnt, eine Nullgurtwelle. Indem die freie Wellenoberfläche 1.1 jeweils den Grundkreis der Nocken 2 bildet, kann die Nockenwelle als Ganzes bei hoher Stabilität sehr kompakt dimensioniert werden, was dann auch eine kompaktere Bauweise des Verbrennungsmotors insgesamt ermöglicht.

Durch den gegenüber der übrigen Rohrwand der Welle 1 radial nach innen gegen die Wellenachse hin jeweils versetzt angeordneten Boden der taschenförmigen Vertiefungen ergibt sich im Bereich der Nocken eine günstige Massenverteilung mit einer nur geringen Unwucht.

### BEZEICHNUNGSLISTE

- 1: rohrförmige Welle
- 1.1: freie Wellenoberfläche
- 2: Nocken
- 2.1: Enden der Nocken
- 2.2: Nut iri den Nocken
- 2.3: Aussenfläche der Nocken
- 3: Lagerringe
- 4: taschenförmige Vertiefungen in der Welle
- 4.1: Boden der taschenförmigen Vertiefungen
- 5: Zahn
- 6: Verbindung

## Patentansprüche

1. Nockenwelle einer Ventilsteuerung in Verbrennungsmotoren mit rohrförmiger Welle (1) und mit auf dieser radial aufgesetzten Nocken (2), wobei die Nocken (2) jeweils passgenau in die Welle (1) eingreifen, zwei Enden (2.1) aufweisen und im Bereich (6) dieser Enden (2.1) mit der Welle (1) schweiss-, löt- oder klebetechnisch verbunden sind und wobei die freie Wellenoberfläche (1.1) jeweils den Grundkreis der Nocken (2) bildet, **dadurch gekennzeichnet, dass** die Nocken (2) jeweils in taschenförmig ausgebildete Vertiefungen (4) der Welle (1) eingreifen.

2. Nockenwelle nach Anspruch 1, **dadurch gekennzeichnet, dass** die Wandstärke (d) er Welle (1) im Bereich der taschenförmigen Vertiefungen (4) nicht oder zumindest nicht wesentlich geringer als ausserhalb dieser Bereiche ist.

3. Nockenwelle nach Anspruch 1 oder 2, **dadurch gekennzeichnet, dass** pro Nocke (2) zwei taschenförmige Vertiefungen (4) an der Welle (1) vorgesehen sind.

4. Nockenwelle nach einem der Ansprüche 1 - 3, **dadurch gekennzeichnet, dass** die Nocken (2) in den taschenförmigen Vertiefungen (4) in Umfangs- und/oder Axialrichtung der Welle (1) formschlüssig gehalten sind.

5. Nockenwelle nach einem der Ansprüche 1 - 4, **dadurch gekennzeichnet, dass** die Welle (1) und die Nocken (2) in Umfangsrichtung der Welle (1) miteinander verzahnt sind.

6. Nockenwelle nach den Ansprüchen 3 oder 4 und 5, **dadurch gekennzeichnet, dass** zwischen den beiden taschenförmigen Vertiefungen (4) jeweils ein Zahn (5) an der Welle (1) und an den Nocken (2) jeweils eine komplementäre Nut (2.2) ausgebildet ist.

7. Nockenwelle nach einem der Ansprüche 1 - 6, **dadurch gekennzeichnet, dass** die Nocken (2) sich in Umfangsrichtung der Welle (1) über einen Winkelbereich von weniger als 180° erstrecken und vorzugsweise massiv umgeformte Formteile sind.

8. Nockenwelle nach einem der Ansprüche 1 - 7, **dadurch gekennzeichnet, dass** im Hubbereich der Nocken (2) zwischen den Nocken (2) und der Welle (1) vorzugsweise kein oder ein im Vergleich mit der Wandstärke (d) der Welle (1) lediglich schmaler Spalt vorhanden ist.

9. Nockenwelle nach einem der Ansprüche 1-8, **dadurch gekennzeichnet, dass** für die Nocken (2) ein hoch härtbares und/oder für die Welle (1) ein leicht härtbares Material verwendet ist.

## Claims

1. A camshaft for the valve control of internal combustion engines comprising a tubular shaft (1) and cams (2) placed radially on the latter, whereby the cams (2) engage in each case with an exact fit in the shaft (1), have two ends (2.1), and are connected to the shaft in the region (6) of these ends (2.1) by welding, soldering or bonding, and whereby the free shaft surface (1.1) in each case forms the base circle of the cams (2), **characterized in that** the cams (2) engage in each case in pocket-shaped depressions (4) of the shaft (1).

2. The camshaft as claimed in claim 1, **characterized in that** the wall thickness (d) of the shaft (1) is not smaller, or at least not substantially smaller, in the region of the pocket-shaped depressions (4) than outside these regions.

3. The camshaft as claimed in claim 1 or 2, **characterized in that** two pocket-shaped depressions (4) are provided on the shaft (1) per cam (2).

4. The camshaft as claimed in one of claims 1-3, **characterized in that** the cams (2) are held in the pocket-shaped depressions (4) in a form-fitting manner in the circumferential and/or axial direction of the shaft (1).

5. The camshaft as claimed in one of claims 1-4, **characterized in that** the shaft (1) and the cams (2) are interlocked in the circumferential direction of the shaft (1).

6. The camshaft as claimed in claims 3 or 4 and 5, **characterized in that** between the two pocket-shaped depressions (4) a tooth (5) is formed in each case on the shaft (1) and a complementary groove (2.2) is formed in each case on the cams (2).

7. The camshaft as claimed in one of claims 1-6, **characterized in that** the cams (2) extend in the circumferential direction of the shaft (1) over an angular region of less than 180° and are preferably parts shaped by massive forming.

8. The camshaft as claimed in one of claims 1-7, **characterized in that**, in the lifting region of the cams (2) between the cams (2) and the shaft (1), there is preferably no gap or only a narrow gap in comparison with the wall thickness (d) of the shaft (1).

9. The camshaft as claimed in one of claims 1-8, **characterized in that** a highly hardenable material is used for the cams (2) and/or a slightly hardenable material is used for the shaft (1).

## Revendications

1. Arbre à cames d'une distribution par soupapes dans des moteurs à combustion interne, avec un arbre tubulaire (1) et avec des cames (2) montées radialement sur celui-ci, dans lequel les cames (2) s'engagent respectivement de manière rapportée dans l'arbre (1), présentent deux extrémités (2.1) et sont assemblées à l'arbre (1) par soudage, brasage ou collage dans la région (6) de ces extrémités (2.1), et dans lequel la surface libre de l'arbre (1.1) forme chaque fois le cercle de base des cames (2), **caractérisé en ce que** les cames (2) s'engagent chaque fois dans des évidements (4) de l'arbre (1) configurés en forme de poches.

2. Arbre à cames selon la revendication 1, **caractérisé en ce que** l'épaisseur de paroi (d) de l'arbre (1) n'est pas ou au moins pas sensiblement plus faible dans la région des évidements en forme de poches (4) qu'à l'extérieur de ces régions.

3. Arbre à cames selon la revendication 1 ou 2, **caractérisé en ce qu'**il est prévu sur l'arbre (1) deux évidements en forme de poches (4) par came (2).

4. Arbre à cames selon l'une quelconque des revendications 1 - 3, **caractérisé en ce que** les cames (2) sont maintenues par emboîtement dans le sens périphérique et/ou axial de l'arbre (1) dans les évidements en forme de poches (4).

5. Arbre à cames selon l'une quelconque des revendications 1 - 4, **caractérisé en ce que** l'arbre (1) et les cames (2) engrènent l'un avec l'autre dans le sens périphérique de l'arbre (1).

6. Arbre à cames selon les revendications 3 ou 4 et 5, **caractérisé en ce qu'**une dent (5) est chaque fois formée sur l'arbre (1) entre les deux évidements en forme de poches (4) et une rainure complémentaire (2.2) est chaque fois formée sur les cames (2).

7. Arbre à cames selon l'une quelconque des revendications 1 - 6, **caractérisé en ce que** les cames (2) s'étendent sur une plage angulaire de moins de 180° dans le sens périphérique de l'arbre (1) et sont de préférence des pièces façonnées massives.

8. Arbre à cames selon l'une quelconque des revendications 1 - 7, **caractérisé en ce que**, dans la zone de levée des cames (2), il n'y a entre les cames (2) et l'arbre (1) de préférence pas ou uniquement une fente étroite par rapport à l'épaisseur de paroi (d) de l'arbre (1).

9. Arbre à cames selon l'une quelconque des revendications 1 - 8, **caractérisé en ce que** l'on utilise un matériau hautement trempant pour les cames (2) et/ou un matériau faiblement trempant pour l'arbre (1).
